Europäisches Patentamt

(19) European Patent Office

Office européen des brevets

(11) **EP 0 595 706 B1**

(12) **FASCICULE DE BREVET EUROPEEN**

(45) Date de publication et mention
de la délivrance du brevet:
**20.08.1997 Bulletin 1997/34**

(21) Numéro de dépôt: **93402619.6**

(22) Date de dépôt: **26.10.1993**

(51) Int. Cl.$^6$: **B29D 9/00**, B29C 47/06,
B32B 27/08, B32B 27/32,
B32B 27/34, C08L 23/00,
C08L 51/00, C08L 77/00

(54) **Stratifiés à base de mélanges compatibilisés de polyamides/polyoléfines et de liants de coextrusion et objets obtenus à partir de ceux-ci**

Schichtmaterialien aus einer kompatibilisierten Polyamid/Polyolefinmischung und einer Haftschicht, sowie damit hergestellte Gegenstände

Laminates of a compatibilised polyamide/polyolefin blend and a tie layer, and articles therefrom

(84) Etats contractants désignés:
**AT BE CH DE DK ES FR GB GR IE IT LI LU NL PT SE**

(30) Priorité: **30.10.1992 FR 9213040**

(43) Date de publication de la demande:
**04.05.1994 Bulletin 1994/18**

(73) Titulaire: **ELF ATOCHEM S.A.**
**92800 Puteaux (FR)**

(72) Inventeurs:
• **Lavorel, Pierre Yves**
**F-74270 Chilly Frangy (FR)**
• **Serve, Myriam**
**F-74000 Annecy (FR)**
• **Vuachet, Michel**
**F-69500 Bron (FR)**
• **Echalier, Bruno**
**F-75006 Paris (FR)**

(74) Mandataire: **Hirsch, Marc-Roger et al**
**Cabinet Hirsch**
**34 rue de Bassano**
**75008 Paris (FR)**

(56) Documents cités:
**EP-A- 0 035 392**   **EP-A- 0 312 305**
**EP-A- 0 506 515**   **WO-A-91/02027**
**DE-A- 3 634 885**   **FR-A- 2 387 793**
**FR-A- 2 664 531**   **GB-A- 1 397 300**

• **DATABASE WPI Week 8530, Derwent Publications Ltd., London, GB; AN 85-181518 & JP-A-60 110 740 (MITSUI PETROCHEM IND KK) 17 Juin 1985**
• **DATABASE WPI Week 8916, Derwent Publications Ltd., London, GB; AN 89-117742 & JP-A-1 062 354 (NISSAN MOTOR KK) 8 Mars 1989**

## Description

La présente invention a pour objet des stratifiés à base d'alliages de polyamides et polyoléfines et de liants de coextrusion, ainsi que les objets obtenus à partir de ceux-ci. Particulièrement, la présente invention a pour objet des articles, feuilles et films obtenus à partir de ou incorporant de tels stratifiés, destinés au renforcement, à la protection et la décoration de substrats.

La décoration de divers substrats, tels que du métal, du bois, des polymères thermodurcissables, des plastiques et autres, nécessite des matériaux ayant des propriétés spécifiques. Ainsi, selon l'usage auquel est destiné l'objet, la décoration doit être protégée des facteurs extérieurs tels que la poussière, les chocs, la rayure et autres.

Parallèlement aux exigences de stabilité dans le temps et dans des environnements drastiques, on a observé une demande accrue pour des décorations de plus en plus complexes et perfectionnées. On a donc développé de nouvelles techniques de réalisation de décors. Ces techniques sont en particulier la méthode de transfert d'encres sublimables et notamment la méthode de sublimation. Cette dernière est décrite dans la demande FR-A-2 387 793, dont le contenu est incorporé par référence dans la présente demande.

Cette technique de décor par sublimation présente, par rapport aux technologies courantes, telles que l'application de vernis, de nombreux avantages, comme: profondeurs des couleurs et protection du décor vis-à-vis des rayures, arrachements et autres. Les matériaux utilisés dans cette technique servent de support aux décors et ont aussi comme fonction de protéger les surfaces des substrats, métal, bois, plastiques, polymères thermodurcissables et autres.

Ainsi, on recherche des matériaux présentant diverses propriétés. Les feuilles ou films sont destinés à la protection et/ou au décor de surfaces diverses (métal, bois, polymère); le matériau doit être chimiquement résistant, mécaniquement résistant (à froid et à chaud), il doit présenter une faible absorption d'humidité. Outre ces propriétés intrinsèques, le matériau doit être facilement formable à chaud, et le collage des feuilles ou films sur le substrat doit se faire avantageusement en une seule opération lors du formage à chaud ou selon toute technique telle que surmoulage sur un film, injection des constituants sur une structure, et autres; le matériau doit aussi être adapté aux conditions utilisées lors du procédé de sublimation et conduire à des décors de qualité élevée dans des conditions de traitement aisées.

La présente invention a pour objet un tel matériau, destiné à être utilisé en particulier dans la technique de décor par sublimation.

On connaît les polymères acrylonitrile/butadiène/styrène ou ABS à cette fin. Cependant, ces copolymères présentent une tenue à la température, à la rayure, aux solvants faible; ils sont relativement rigides et donc sont peu facilement formables.

On connaît aussi les polyuréthanes, mais la technique de sublimation s'applique mal à ces derniers. Par ailleurs, la mise en oeuvre des polyuréthanes est très différente de celle des thermoplastiques, les polyuréthanes ne présentant pas les facilités de formage de ces derniers.

La demande de brevet FR 2 596 286 décrit l'utilisation d'un support constitué d'une couche externe en polyamide 11 et d'une sous-couche en polyamide-polyéther séquencé (PEBA). Mais ce type de support pose un problème de résistance au fluage à chaud pour les qualités (grades) souples ainsi qu'un problème d'adhésion sur les substrats.

La demande de brevet FR 900 74 20 et EP-A-0 506 515 décrit des films de collage qui apportent un perfectionnement à la demande FR 2 596 286, en remplaçant la sous-couche par un matériau dont la composition est à base de polyamide et de polyoléfines modifiées. Néanmoins, ces assemblages emploient des matériaux très techniques qui présentent des inconvénients en termes économiques. La mise en forme de ces assemblages présente aussi des problèmes du fait d'un fluage à chaud élevé et, de plus, ces produits sont difficiles à thermoformer notamment lorsque les substrats formant support présentent des angles accentués, et les temps de cycle pour la phase de décoration par sublimation sont relativement longs (de l'ordre de 5 minutes à 150°C).

Pour réaliser la couche externe, les polyamides non modifiés (PA6 ou PA66) ou faiblement modifiés par des additifs chocs, des charges, etc., présentent également de nombreux avantages mais la reprise en humidité, connue pour ces produits, entraîne des variations dimensionnelles importantes des pièces fabriquées et des diminutions sensibles de leurs propriétés mécaniques. Les polyamides PA 6 et PA 6,6, les copolyamides PA 6/6,6 et, d'une manière générale, les polyamides PA sont également connus pour être sensibles aux solvants polaires, d'une part, et peu résistants aux phénomènes d'hydrolyse (acides minéraux et organiques), d'autre part.

On peut penser utiliser des polypropylènes ou PP mais la tenue mécanique (en particulier le choc à froid et la résistance à l'abrasion) de ces produits est faible. La résistance thermique de ces produits est également limitée et ces produits se prêtent mal à la réalisation de décor par sublimation ou par les techniques classiques de peinture qui requiert une bonne adhésion du film de peinture sur le substrat. Les polypropylènes ou, d'une manière générale, les polyoléfines sont en effet réputés pour être difficiles à peindre.

Ainsi, il existe un besoin d'un tel matériau qui pallie les inconvénients selon l'art antérieur et remplit les conditions techniques énumérées ci-avant.

La présente fournit donc un stratifié pour le renforcement, la protection et la décoration d'un substrat, comprenant:

(i) au moins une couche d'un alliage polyamide/polyoléfine compatibilisé,

2

(ii) au moins une couche d'un liant de coextrusion, la couche de liant de coextrusion étant au contact dudit substrat.

Les alliages PA6/Polyoléfine ou PA66/Polyoléfine, notamment PA6/PP ou PA66/PP absorbent beaucoup moins d'humidité que les PA6 ou PA66. On ne connaît pas de solvants aux alliages PA6/Polyoléfine ou PA66/Polyoléfine et la résistance à l'hydrolyse des alliages PA/Polyoléfine est très nettement supérieure à celle du polyamide correspondant. La résistance chimique d'un alliage PA/Polyoléfine est donc très supérieure à celle du polyamide rentrant dans sa composition, et ce quel que soit le polyamide considéré. Par rapport aux polyamides 11 et 12, la résistance thermique d'un alliage PA6 ou PA66 ou encore d'un copolyamide 6/66 avec du polypropylène est très nettement supérieure. De ce fait, les alliages PA/Polyoléfine présentent de gros avantages par rapport aux technologies existantes soit par l'inertie chimique, soit par la résistance thermique, soit par la combinaison unique de propriétés que ces alliages PA/Polyoléfine apportent par rapport à l'emploi d'un polyamide seul, soit par les températures de mise en oeuvre élevées que ces alliages PA/Polyoléfine autorisent.

De plus, les alliages PA/Polyoléfine se peignent avec les techniques communément utilisées pour peindre les PA: flammage léger ou apprêt type polyamides par exemple, sans exclure les techniques de peinture éprouvées sur polyoléfines: flammage par exemple ou traitement plasma.

La qualité du décor réalisé par sublimation augmente avec la température à laquelle est réalisée cette opération de sublimation. La température de fusion élevée des alliages PA6/Polyoléfine ou PA66/Polyoléfine autorise une opération de sublimation à température élevée. Le décor obtenu est donc de meilleure qualité par rapport à celui obtenu à partir d'ABS ou de PA à faible température de fusion ou encore de polypropylène.

Toutefois, l'inertie chimique des alliages PA/Polyoléfine évoquée ci-dessus est telle que le collage de ces produits est impossible par les méthodes connues d'assemblage par colles à solvants.

L'adhésion directe par pressage à chaud des alliages PA/Polyoléfine sur des substrats métalliques du bois ou des surfaces synthétiques (thermodurcissables par exemple) est de plus difficile, dans la plupart des cas impossible.

La présente invention fournit donc un stratifié ou une feuille multicouche (au moins bicouche) dont la couche superficielle est réalisée en un alliage de polymère polyamide/polyoléfine compatibilisé, et comprenant une couche adhésive à base de liant qui permet une liaison de cet alliage de polymère sur divers substrats. L'alliage est composé d'au moins un polyamide et d'au moins une polyoléfine, et comprend un agent compatibilisant. Ces feuilles ou films sont facilement formables et sublimables et peuvent donc être utilisés pour renforcer, protéger ou décorer divers substrats.

Ces structures stratifiés ou multicouches présentent la particularité de pouvoir être collées sur divers substrats, d'être facilement décorées et de présenter une combinaison très intéressante de résistance thermique, de résistance chimique et une faible sensibilité aux phénomènes de reprise d'humidité.

La présente invention concerne ces stratifiés ou multi-couches, leur fabrication et les diverses utilisations de ces multicouches, notamment en tant qu'éléments de décors et de protection de surfaces.

Selon un mode de réalisation, le polyamide forme la matrice dudit alliage. La polyoléfine est, selon ce mode de réalisation, dispersée dans la phase polyamide formant matrice.

La polyoléfine de l'alliage est de préférence une polyoléfine dont le poids moléculaire est compris entre 1 000 et $10^6$ et est avantageusement le polypropylène PP.

La polyamide de l'alliage est de préférence un polyamide aliphatique, ou un mélange de tels polyamides, tel que PA6, PA6.6, PA11, PA12, PA12.12); avantageusement, le polyamide est le polyamide PA6 ou PA6,6.

Le polyamide représente de préférence de 25 à 75% en poids, avantageusement de 30 à 70% en poids, par rapport au poids de l'alliage, de préférence 50 à 70% en poids.

Les alliages de polymères polyamides/polyoléfines doivent, pour présenter de bonnes propriétés mécaniques, comprendre au moins un compatibilisant.

Ce compatibilisant est généralement composé d'une polyoléfine ou d'une copolyoléfine greffée, avec une fonction acide ou un dérivé d'un tel acide, par exemple anhydride maléique, ou d'un copolymère comprenant par exemple un monomère d'éthylène ou d'$\alpha$-oléfine ou éventuellement de dioléfine avec un comonomère choisi parmi les esters vinyliques d'acide carboxylique saturé, les acides mono- et di-carboxyliques insaturés, leurs esters, leurs sels, les anhydrides d'acides dicarboxyliques saturés ou non.

Ainsi, selon un mode de réalisation, l'agent de compatibilisation est une (co)-polyoléfine sur laquelle est greffée une fonction acide carboxylique ou un dérivé de cette fonction; avantageusement ce dérivé d'acide est l'anhydride maléique.

Par le terme "polymère greffé avec (ou par) un monomère", il faut comprendre polymère sur lequel est greffé le greffon constitué du monomère.

Par polyoléfine ou copolyoléfine, on entend notamment les polyéthylènes, les poly $\alpha$-oléfines, les polydioléfines, les copolymères d'éthylène et de propylène, ainsi qu'également les copolymères bloc à base de styrène et notamment ceux constitués de séquences de polystyrène et de séquences de polybutadiène (SBS), de séquences de polystyrène et de séquences de polyisoprène (SIS), de séquences de polystyrène et de poly(éthylène-butylène) (SEBS) contenant de 0,2 à 0,8% en poids d'anhydride maléique et de 30 à 55% de styrène pour les SBS, de 15 à 25% pour les SIS et de 13 à 32% pour les SEBS.

Les copolymères mentionnés ci-avant peuvent être polymérisés de façon statistique ou séquencée et présenter une structure linéaire ou ramifiée.

Selon un mode de réalisation, ledit alliage contient un agent de compatibilisation qui est une polyoléfine (ou polyoléfine modifiée) greffée, de préférence avec de l'anhydride maléique. Cette polyoléfine (ou polyoléfine modifiée) peut être greffée par ailleurs avec un oligoamide ou avec un polyamide, susceptible de réagir avec la fonction anhydride maléique par exemple.

A titre d'exemple, on citera comme composition d'alliage PA/Polyoléfine la composition suivante, décrite dans la demande FR-91 03870, incorporée à la présente par référence:

A. une alpha-oléfine de poids moléculaire compris entre 1 000 et 1 000 000;

B. une alpha-oléfine de A greffée maléique ou acrylique;

C. un copolymère d'alpha-oléfine greffé constitué d'un oligoamide ou d'un polyamide de masse comprise entre 500 et 40 000, monoaminé et d'une alpha-oléfine greffée avec un monomère pouvant réagir avec la fonction amine de l'oligoamide ou du polyamide;

D. un polyamide aliphatique ou un mélange de polyamide aliphatique.

On préférera, pour la présente invention, des compositions dans lesquelles les pourcentages en poids sont les suivants:

$30 \leq A + B + C \leq 65$ avec $1 \leq A \leq 64$

et $B + C \geq 1$ avec $0 \leq B \leq 64$

et $35 \leq D \leq 70$

et $A + B + C + D = 100$ avec $0 \leq C \leq 64$

On peut également mélanger aux compositions des alliages PA/Polyoléfine décrites ci-dessus des compositions d'élastomères dont le rôle est connu dans toute matrice polymère et qui ont pour objet de diminuer le module de flexion, d'augmenter la résistance au choc. Ces élastomères peuvent être présents en des quantités allant jusqu'à 50% en poids, de préférence de 5 à 25% en poids, par rapport à la composition finale. A titre d'exemple de tels élastomères, on citera:

- les caoutchoucs d'éthylène et de propylène maléisés (EPRm), particulièrement préférés par la demanderesse, contenant 0,1 à 2% en poids d'anhydride maléique;
- les copolymères d'éthylène, de propylène et de diène maléisés (EPDMm);
- les copolymères d'éthylène, de (meth)acrylate d'alkyle (tel qu'acrylate de méthyle, éthyle, N-butyle) et éventuellement d'anhydride maléique contenant de 2 à 40% en poids de (meth)acrylate d'alkyle et de 0,01 à 8% en poids d'anhydride par rapport au poids total du copolymère.

Aux compositions décrites ci-dessus, on peut incorporer divers autres constituants tel que des charges, des pigments ou colorants, divers additifs.

A titre d'exemple de charges, on peut citer des fibres ou des billes de verre, des fibres de carbone, d'aramides, des talcs, de la silice, du carbonate de calcium, du kaolin, des céramiques, des sels et oxydes métalliques tels que poudre d'aluminium, de manganèse, poudre de ferrite, oxyde de titane, des pigments pailletés pour conférer un aspect de peinture métallisée.

En général, on peut incorporer jusqu'à 50% en poids de ces charges par rapport à la composition des alliages PA/Polyoléfine compatibilisés proprement dits. De préférence, la charge représente jusqu'à 40% en poids.

A titre d'exemple d'additifs, on peut citer des agents de protection contre le rayonnement ultraviolet, des agents azurants, des agents démoulants, des agents antistatiques, des agents de protection contre la dégradation thermique.

Les compositions peuvent être préparées en une fois, notamment par compoundage. Les constituants, le plus souvent sous forme de granulés d'un diamètre moyen inférieur à 5 mm, sont mélangés à l'état fondu, en général dans un malaxeur, à une température comprise entre 230 et 300°C. Les compositions obtenues se présentent le plus souvent sous forme de granulés d'un diamètre moyen inférieur à 5 mm. Il est aussi possible de préparer les alliages en plusieurs fois, notamment par dilution ou mélange, d'un pré-alliage dans du PA ou une Polyoléfine, cette étape de mélange ou dilution pouvant par ailleurs être mise en oeuvre au moment même de l'extrusion, lorsque les proportions des constituants sont respectées.

Certains additifs (colorants, agents démoulants ou lubrifiants, etc) peuvent être incorporés par mélangeage au mélange à l'état de fusion ou à sec aux granulés obtenus.

Dans ce qui suit, on désignera, à titre de simplification, par alliage PA/PO, les alliages PA/Polyoléfine décrites ci-dessus. La Société ELF ATOCHEM fabrique des alliages PA/PO répondant à la définition ci-dessus. Ces alliages PA/PO sont commercialisés sous la marque ORGALLOY et correspondent à des alliages PA/PP, PA/PE, et PA/Polyoléfine modifiée.

Le liant de coextrusion est destiné à assurer l'adhésion de l'alliage sur le substrat, et forme avec l'alliage à l'étape finale un stratifié sur le substrat. Ce liant de coextrusion peut aussi être dénommé liant thermoplastique, agent de collage thermofusible, etc.

Selon un mode de réalisation, ledit liant de coextruion est une polyoléfine modifiée, ou un copolymère de polyoléfine modifiée, par un dérivé d'acide carboxylique insaturé (copolymérisation, terpolymérisation ou greffage). Ces (co)polyoléfines peuvent être utilisées seules ou en mélange avec d'autres polyoléfines.

Pour obtenir de telles composition, il est connu d'après US-P-4 452 942 de procéder selon ce qui suit:

1) greffer un dérivé d'acide carboxylique insaturé (par exemple anhydride maléique) sur une polyoléfine (par exemple un polyéthylène linéaire ou un polypropylène);

2) mélanger les (co)polymères greffés résultants avec une autre polyoléfine comprenant:

- un homopolymère de l'éthylène; ou
- un copolymère éthylène/$\alpha$-oléfine; ou
- un copolymère d'éthylène et d'esters insaturés ou leurs dérivés; ou
- un mélange de ces polyoléfines, toutes les combinaisons étant possibles.

Il est également possible pour obtenir un liant de coextrusion de réaliser le greffage direct d'un mélange de polyoléfines. Une autre possibilité consiste à utiliser comme liant un copolymère ou terpolymère comprenant un dérivé d'acide carboxylique insaturé, issu d'une copolymérisation radicalaire.

Par polyoléfines modifiées utilisées en tant que liant, on peut citer à titre d'exemple les compositions suivantes, obtenues par polymérisation de:

A. un monomère d'éthylène ou d'alpha-oléfine ou éventuellement de dioléfine,

B. au moins un comonomère choisi parmi les esters vinyliques d'acide carboxylique saturé, les acides mono- et dicarboxyliques insaturés, leurs esters, sels, les anhydrides d'acides dicarboxyliques saturés ou non.

L'oléfine, i.e. le monomère oléfinique, représente au moins 50% et, de préférence, au moins 60% du poids total du copolymère. Les copolymères peuvent être polymérisés de façon statistique ou séquencée et présenter une structure linéaire ou ramifiée; pour les copolyoléfines selon l'invention.

Des exemples de ces procédés de greffage ou de composition de liants sont donnés, non-limitativement, dans les brevets ci-après: EP-210307, EP-33220, EP-266994, FR-2132780, EP-171777, USP-4758477, USP-4762890, USP-4966810, USP-4452942, USP-3658948.

Parmi ces liants de coextrusion communément utilisés dans de nombreuses associations, on choisira de préférence les liants de composition chimique suivante:

- les copolymères de l'éthylène copolymérisé avec butène, hexène, octène, mélangés éventuellement avec des copolymères d'éthylène-propylène, greffés par de l'anhydride maléique, lesdits copolymères d'éthylène/oléfine contiennent de 35 à 80 % en poids d'éthylène, le taux d'anhydride maléique greffé est compris entre 0,01 à 1% en poids, de préférence entre 0,05 et 0,5 %, par rapport au poids total de copolymère;
- les copolymères d'éthylène et d'acétate de vinyle (EVA), maléisés ou non (l'anhydride maléique pouvant être greffé ou terpolymérisé), particulièrement contenant de 2 à 40% en poids d'acétate de vinyle, de 0,01 à 0,5% en poids d'anhydride maléique greffé ou de 0 à 10% en poids d'anhydride maléique terpolymérisé par rapport au poids total de copolymère;
- les copolymères d'éthylène, de (meth)acrylate d'alkyle (tel qu'acrylate de méthyle, éthyle, t-butyle) et d'anhydride maléique contenant de 2 à 40% en poids de (meth)acrylate d'alkyle et de 0,01 à 8% en poids d'anhydride par rapport au poids total du copolymère.

La Société ELF ATOCHEM fabrique de tels liants répondant à la définition ci-dessus. Un tel de ces liants est un mélange de polyoléfines modifiées par un groupe acide carboxylique par greffage d'anhydride maléique. Ce liant est disponible dans le commerce sous forme de granulés portant la marque OREVAC 18302 ou OREVAC PP-C.

Dans ce qui suit, on désignera par "liant" le liant d'extrusion comprenant notamment les compositions de polyoléfines modifiées décrites ci-dessus.

Il est possible d'incorporer dans les liants les mêmes additifs et/ou charges que ceux spécifiés ci-avant pour les alliages, et de façon générale dans les mêmes proportions.

En raison de leur mise en oeuvre aisée, de leurs bonnes propriétés mécaniques (notamment résistance au choc à froid, résistance à l'abrasion, à l'entaille et à la déchirure), de leur grande inertie chimique (pas de solvants connus), de leur stabilité dimensionnelle entre -40 et +150°C, de leur bon comportement au vieillissement ainsi que de leur très grande aptitude au collage et à la décoration (résistance thermique, résistance au fluage), les compositions selon l'invention peuvent être utilisées sous des formes très diverses (pièces moulées ou extrudées, films et feuilles extrudés) pour la protection, le décor ou le renforcement d'objets composites, notamment protection et/ou décoration de supports plans ou de formes complexes ou de pièces moulées ou de pièces surmoulées. Ce but est atteint, par exemple, par collage de pièces rapportées, thermoformage sur pièces complexes, complexage sur films ou feuilles.

La présente invention a aussi pour objet la réalisation de feuilles ou films et d'objets moulés ou extrudés obtenus à partir de l'alliage et du liant, constitutifs du stratifié final selon la présente invention. Ainsi, la présente invention concerne aussi les divers procédé de revêtement de substrat à l'aide de l'alliage et du liant.

Les feuilles ou films peuvent être obtenus selon des techniques connues d'extrusion, comme l'extrusion-calandre à plat, l'extrusion plaxage, l'extrusion-soufflage, etc. Les températures de mise en oeuvre des alliages PA/PO sont généralement supérieures de 20 à 60°C au point de fusion du PA utilisé dans l'alliage. Les températures de mise en oeuvre des liants sont généralement supérieures de 20 à 60°C au point de fusion du liant utilisé pour la confection du stratifié, lorsque le liant présente un point de fusion.

Selon "Modern Plastic Encyclopedia", on réserve le terme de films à des objets plans dont l'épaisseur est inférieure à 250 μm et le terme de feuille à des objets d'épaisseur supérieure pouvant atteindre plusieurs mm. Dans la présente description, et pour des raisons de commodité et de simplification, ces termes sont utilisés alternativement pour désigner l'un quelconque des produits. Selon la technologie employée, on peut obtenir des films ou feuilles dont l'épaisseur est comprise entre 10 μm et 5 mm voire plus.

Par coextrusion d'un alliage PA/PO, ou de plusieurs couches d'alliages PA/PO ou encore de plusieurs couches de matériaux compatibles entre eux et dont la couche inférieure est compatible avec la couche de liant, et d'une couche ou plusieurs couches de liants, on obtient directement un stratifié ou bicouche ou multicouche.

Ce stratifié, sous la forme d'un film ou feuille peut être directement collé sur les divers substrats envisagés dans le cadre de la présente invention.

Selon un mode de réalisation de la présente invention, le procédé de revêtement de substrat pour son renforcement, sa protection et sa décoration est caractérisé en ce que l'on coextrude l'alliage PA/polyoléfine et le liant pour préparer un film, l'on applique ce film sur le substrat, et l'on provoque l'adhésion.

Il est aussi possible de fabriquer le stratifié par extrusions préalables des constituants sous forme de films puis assemblage de ces films par plaxage: on procède au dépôt de la feuille de liant, préalablement fabriquée notamment par extrusion à plat ou extrusion-soufflage, sur une feuille d'alliage PA/PO préalablement fabriquée puis pressage à chaud de ces deux feuilles. Le plaxage d'un film de liant immédiatement après la fabrication par extrusion d'un film d'alliage PA/PO donne de bons résultats si on procède à un calandrage à chaud en sortie d'extrudeuse.

Selon un mode de réalisation de la présente invention, le procédé de revêtement de substrat pour son renforcement, sa protection et sa décoration est caractérisé en ce que l'on prépare deux films, d'une part d'alliage PA/polyoléfine et de liant d'autre part, l'on procède au plaxage de ces films et on applique alors le produit ainsi obtenu sur le substrat, et l'on provoque l'adhésion.

On peut également superposer le ou les films de liant et le film mono- ou multicouche du ou des alliages PA/PO et procéder au pressage à chaud (170 °C pendant 2 à 3 mn) au moment de la mise en oeuvre pour obtenir l'adhésion entre les différentes couches.

Selon un mode réalisation, le procédé de revêtement de substrat pour son renforcement, sa protection et sa décoration est caractérisé en ce que l'on prépare deux films, d'une part d'alliage PA/polyoléfine et de liant d'autre part, l'on applique ces deux films sur le substrat, et l'on provoque l'adhésion.

Selon un mode de réalisation, l'adhésion est provoquée par un pressage à chaud, un plaxage, ou un surmoulage. La température est suffisante à cette fin; avantageusement elle est supérieure à 130°C.

Les films ainsi obtenus peuvent être collés sur des pièces rigides, notamment sur des pièces métalliques (telles que câbles, tôles, etc), sur des pièces en bois, en aggloméré, ou sur des pièces en matériaux synthétiques tels que polyesters, résines époxydes, copolymères ABS, polystyrène et autres, (avec un liant phénolique par exemple). Ces films sont collés sur les divers substrats mentionnés dans la présente description selon plusieurs techniques préférées indiquées ci-dessus ou selon des techniques connues en soi.

La présente invention envisage encore d'autres modes de réalisation d'articles. Les pièces moulées ou extrudées, dans le cas de figure envisagé sous une forme différente de celle du film ou de la feuille, par exemple sous forme de profilés peuvent être obtenues selon des techniques préférées et, à défaut selon des techniques classiques. Ces pièces sont désignées sous le terme de pièces façonnées.

Les pièces moulées ou extrudées peuvent être bi-injectées ou coextrudées (avec injection simultanée d'alliage et de liant) de façon à obtenir une pièce composite en une seule opération, la couche de liant étant du côté où on souhaite effectuer le collage sur le substrat quelconque.

Selon un mode de réalisation de la présente invention, le procédé de revêtement de substrat pour son renforcement, sa protection et sa décoration est caractérisé en ce que l'on façonne un film d'alliage PA/polyoléfine et de liant, l'on applique ce film façonné sur le substrat et l'on provoque l'adhésion.

Il est aussi possible d'opérer en deux temps, par injection de l'alliage puis surmoulage du liant, ou inversement.

Selon un mode de réalisation de la présente invention, le procédé de revêtement de substrat pour son renforcement, sa protection et sa décoration est caractérisé en ce que l'on façonne un film d'alliage PA/polyoléfine, l'on surmoule la couche de liant, ou inversement, l'on applique la pièce façonnée ainsi obtenue sur le substrat et l'on provoque l'adhésion.

On peut aussi réaliser une pièce en alliage PA/PO par mono-injection ou mono-extrusion puis intercaler une feuille ou un film de liant entre la pièce réaliser en alliage et le substrat formant support. L'opération de collage à chaud nécessaire à l'adhésion du liant sur le substrat permet alors de réaliser simultanément le collage du liant sur le substrat et sur la feuille en alliage PA/PO. La pièce décrite ci-dessus peut être également une pièce composite multimatériau obtenue en associant par co-injection ou coextrusion des alliages PA/PO avec des PA, des PEBA ou encore des polyoléfines modifiées, en général tout polymère thermoplastique connu pour ses propriétés d'adhésion sur polyoléfine ou polyamides.

Selon un mode de réalisation de la présente invention, le procédé de revêtement de substrat pour son renforcement, sa protection et sa décoration est caractérisé en ce que l'on façonne un film d'alliage PA/polyoléfine, l'on prépare un film de liant, l'on interpose ledit film de liant entre la pièce en alliage ainsi façonnée et le substrat et l'on provoque l'adhésion.

On peut également placer la pièce injectée ou extrudée mono- ou multi-matériau sur un substrat formant support préalablement récouvert d'une couche de liant, puis procéder à une opération de plaxage, de co-injection ou de surmoulage, afin d'opérer l'adhésion.

Selon un mode de réalisation de la présente invention, le procédé de revêtement de substrat pour son renforcement, sa protection et sa décoration est caractérisé en ce que l'on façonne un film d'alliage PA/polyoléfine, l'on revêt le substrat d'une couche de liant, l'on applique la pièce d'alliage ainsi façonnée sur le substrat revêtu de la couche de liant et l'on provoque l'adhésion.

Selon un mode de réalisation, l'adhésion est provoquée par un pressage à chaud, un plaxage, ou un surmoulage. La température est suffisante à cette fin; avantageusement elle est supérieure à 130°C.

Il est aussi possible de former le stratifié par tout procédé approprié, puis de le placer dans un moule et d'injecter une charge qui forme le substrat.

De façon générale, les stratifiés sont donc affixés sur le substrat par surmoulage ou thermoformage avec adhésion directe ou thermoformage puis adhésion.

Les matériaux selon la présente invention peuvent être décorés selon la technique d'impression de transfert d'encres sublimables et notamment selon les procédés décrits dans FR-A-2 387 793. La décoration de ces matériaux peut également être mise en oeuvre selon d'autres techniques telles que la sérigraphie, peinture ou vernissage, transfert à chaud, tampographie, jet d'encre, marquage laser, étant entendu que toutes ces techniques de décoration peuvent être appliquées à tous films de la présente invention et tous les articles en dérivant sous toutes leurs formes.

Pour améliorer encore la qualité des décors et la protection de ceux-ci, on pourra avantageusement réaliser du coté externe un bicouche composé d'une couche transparente ou translucide d'un alliage PA/PO (ne contenant pas ou peu d'additifs colorants) en association avec une couche opaque composée du même alliage PA/PO ou d'un autre alliage de proportions des constituants différents ou d'un autre alliage compatible, ou alors d'un PA identique ou de même nature chimique que celui utilisé pour la fabrication de l'alliage PA/PO. La couche opaque sera de préférence de couleur blanche. La brillance et la profondeur des couleurs du décor ainsi réalisé par sublimation seront renforcées. La coextrusion de tels films ou feuilles multicouche est aisée, et ne nécessite pas de liant de coextrusion pour assurer l'adhésion entre la couche d'alliage externe et la couche d'alliage interne colorée. On prend garde à ce que la couche au contact du liant soit réactive vis-à-vis de celui-ci.

Selon un mode de réalisation de la présente invention, le stratifié est caractérisé en ce que la couche d'alliage est constituée d'au moins deux couches dont au moins une est formée de l'alliage précité, et est au contact du liant et contient un additif de couleur. L'additif de couleur peut aussi être un agent opacifiant. On obtient alors des multi-couches, dont l'une des couches est un alliage PA/PO, le ou les autres couches étant soit des alliages, soit d'autres matériaux compatibles, en ce sens qu'ils collent ensemble sans l'aide de liant. Il est aussi possible d'utiliser des matériaux non-compatibles et de les coller par l'intermédiaire d'une couche de liant.

Selon la variante exposée ci-dessus, la couche translucide a une épaisseur comprise entre environ 0,1 et environ 1 mm, l'épaisseur de la couche opaque étant comprise entre environ 0,3 et environ 2 mm. Cette couche peut être décorée par sublimation à travers la couche translucide. Le décor est protégé par l'épaisseur de la couche transparente et est révélé par la couche opaque. Cette dernière peut par ailleurs avoir un effet de masque vis-à-vis du substrat formant support. L'opération de sublimation peut être mise en oeuvre à tout moment sur le stratifié, le film ou la pièce façonnée.

Ainsi, selon ce mode de réalisation de l'invention, les épaisseurs des couches d'alliage, identiques ou différentes, sont comprises entre 0,1 et 1 mm, de préférence entre 0,15 et 0,8 mm. Selon ce mode de réalisation, l'épaisseur de la couche de liant est comprise entre 0,1 et 1 mm, de préférence entre 0,15 et 0,5 mm.

Alternativement et toujours dans le but d'améliorer la qualité des décors et la protection de deux-ci, on pourra avantageusement réaliser un stratifié dans lequel la couche de liant est une couche opaque ou est une couche colorée. Cette couche opaque ou colorée est de préférence blanche; cette couleur est obtenue par des pigments classiques, tels que du dioxyde de titane. La brillance et la profondeur des couleurs du décor ainsi réalisé par sublimation seront renforcées, le décor dans l'épaisseur de la couche d'alliage étant révélé par la couche opaque. Selon ce mode de réalisation, la couche d'alliage est unique. La réalisation de tels stratifiés s'effectue de façon classique et ne pose pas de problème supplémentaire.

Ainsi, selon cet autre mode de réalisation de la présente invention, le stratifié selon la présente invention est caractérisé en ce que la couche de liant contient un additif de couleur. Le terme "additif de couleur" recouvre aussi les agents opacifiants.

Selon cet autre mode de réalisation, l'épaisseur de la couche d'alliage est comprise entre 0,1 et 1 mm, de préférence entre 0,15 et 0,8 mm; l'épaisseur de la couche de liant est comprise entre 0,1 et 1 mm, de préférence entre 0,15 et 0,5 mm.

Selon une variante de la présente invention, le stratifié selon l'invention a une épaisseur finale comprise entre 0,2 et 2 mm, de préférence comprise entre 0,4 et 1,3 mm.

Par ailleurs, il est possible d'associer des couches de renfort, telles que des couches ou nappes à base de métal, de résine, et notamment de résine époxyde ou polyester. Selon la technique utilisée, on peut réaliser la réticulation de la résine lorsque l'on provoque l'adhésion. Ceci est particulièrement avantageux avec des nappes textiles imprégnées de résine non-réticulée lors de la mise en oeuvre, dont la réticulation est obtenus lors d'un moulage.

La présente invention s'applique à toute réalisation impliquant l'association d'un alliage PA/PO avec un substrat polaire ou non-polaire. Outre les substrats déjà récités ci-avant, on peut citer en particulier la réalisation de films ou pièces façonnées multicouches associant des alliages PA/PO avec des polyoléfines telles que des polyéthylènes et polypropylènes.

Parmi les domaines d'application des films multicouches obtenus, on citera tout particulièrement:

- le domaine de l'automobile avec, par exemple, la réalisation de pièces internes de véhicules telles tout ou partie de tableau de bord, accoudoirs, contre-porte, ..., la réalisation de pièces extérieures de véhicules avec par exemple: ailes, portes, enjoliveurs de roues, pare-choc, ...;
- l'électroménager avec par exemple la réalisation de dessus de pèse-personne, les dessus de machines à laver, etc.;
- le domaine du sanitaire avec la réalisation de couvercles de toilettes, des distributeurs de coton, des tablettes et des porte-serviettes,
- dans l'électrotechnique, on citera comme exemple la réalisation de façades avant des armoires de commande, des touches de commande, des tableaux synoptiques, ...;
- le domaine de l'ameublement: portes de placards, fenêtres, façades de cuisine, revêtements muraux, panneaux publicitaires;
- le domaine du sport avec comme exemple: la réalisation de décors ou de protection sur des palmes, des planches à voile, ponts de bateaux, skis nautiques ou planches à roulette.

Parmi les domaines d'application des pièces façonnées, on citera tout particulièrement:

- le domaine de la chaussure avec la fabrication de contreforts ou de pièces rapportées sur des coques de chaussure ou des semelles, ...;
- le domaine de l'automobile avec la fabrication d'objets de tailles très diverses, par exemple monogrammes, touches de commande, éléments de pare-choc, ...;
- le domaine de l'électroménager avec la fabrication de touches de commande, d'éléments de décor en superstructure, ...;
- le domaine de l'ameublement avec, par exemple, le collage d'éléments rapportés de manutention ou de décor, ...

La présente invention a aussi pour objet les films obtenus à l'aide d'un stratifié tel que décrit ci-dessus, ainsi que les substrats revêtus d'un tel stratifié. Particulièrement, la présente invention envisage l'utilisation d'un tel stratifié pour la décoration selon la technique de sublimation.

Selon la technique de décoration par sublimation, la phase de décoration peut, suivant le cas, être mise en oeuvre avant fixation du stratifié sur le substrat ou après la fixation; dans ce dernier cas le substrat est généralement de forme simple.

La présente invention est décrite plus en détail dans les exemples suivants.

EXEMPLE I

Dans une machine de coextrusion à plat munie de deux extrudeuses A et B, d'une boîte de raccordement de type KAUFMAN, avec une filière (largeur 1 m) du type "porte-manteau" avec barre d'étranglement et lèvres réglables, on procède à la fabrication d'une feuille bicouche d'un alliage PA/PP (ORGALLOY R6000) et d'une couche de liant (OREVAC 18302). L'ORGALLOY R6000 commercialisé par ELF ATOCHEM présente les caractéristiques indicatives suivantes:

| . Melt Flow Index (235°C, 2,16 kg) | 6 à 12 |
|---|---|
| . densité | 1,03-1,04 |
| . résistance au choc Charpy entaillé (Norme ISO 179) | 15-27 kJoules/m$^2$ |
| . module de flexion à l'équilibre à 23°C-50% HR (Norme ISO 178) | 1400-1700 MPa |
| . taux d'humidité à l'équilibre 50% RH, 23°C | 1,2-1,5% |
| . point de fusion (ISO R1218) | 220°C |

L'OREVAC 18302, commercialisé par ELF ATOCHEM est un liant de coextrusion du type polyéthylène basse densité greffé anhydride maléique dont les caractéristiques indicatives sont les suivantes:

| - densité (ISO 1183) | 0,91 |
|---|---|
| - Melt Flow Index (ASTM D1238) | 0,89 g/10 minutes |
| - température de fusion (ISO R1218) | 117°C |
| - dureté Shore A (ISO R868) | 48 |
| - module d'élasticité en traction (ISO R527) | 44 MPa |

Les conditions d'extrusion sont les suivantes:

- extrudeuse A - alliage PA/PP (ORGALLOY R6000)

| . diamètre extrudeuse | 90 mm |
|---|---|
| . rapport longueur/diamètre | 28/1 |
| . température d'extrusion | 230/240/250/255 |

- extrudeuse B - liant à base de polyéthylène greffé anhydride maléique (OREVAC 18302)

| . diamètre extrudeuse | 45 mm |
|---|---|
| . rapport longueur/diamètre | 24/1 |
| . température d'extrusion | 210/220/230/250 |

L'entrefer de la filière est fixé à 3 mm, l'écartement des calandres est de 2,5 mm. Les températures des rouleaux de calandrage sont de:

| . rouleau supérieur | 20°C |
|---|---|
| . rouleau médian | 60°C |
| . rouleau inférieur | 40°C |

On obtient une feuille bicouche de 1 mm d'épaisseur comprenant 0,8 mm d'ORGALLOY R6000 et 0,2 mm d'OREVAC 18302 (avec une vitesse de tirage de 1 m/minute). On réalise par pressage à chaud entre des températures de 130°C à 150°C pendant 3 à 5 minutes un assemblage sur une structure époxy ou polyester renforcée fibre de verre. On vérifie que l'adhésion entre couches est bonne par un test de pelage en T pratiqué sur des éprouvettes de 50 mm de large et de 250 mm de longueur. L'amorce est réalisée par un cutter. On obtient (moyenne de cinq essais) une valeur de 11,7 N/mm. Des valeurs supérieures à 24 N/mm ont été obtenues si l'on substitue dans cet exemple l'ORGALLOY R6000 par l'ORGALLOY RS60ES commercialisé par ELF ATOCHEM et dont les caractéristiques indicatives sont:

| | |
|---|---|
| . Melt Flow Index (235°C, 2,16 kg) | de 1,0 à 2,0 |
| . densité | 1,03-1,04 |
| . résistance au choc Charpy entaillé (Norme ISO 179) | 20-30 kJoules/m$^2$ |
| . module de flexion à l'équilibre à 23°C-50% HR (Norme ISO 178) | 1400-1700 MPa |
| . taux d'humidité à l'équilibre 50% RH, 23°C | 1,2-1,5% |
| . point de fusion (ISO R1218) | 220°C |

EXEMPLE II

On coextrude sur la machine, décrite dans l'exemple I, un tricouche composé d'une couche d'un alliage PA/PP (ORGALLOY RS6000), d'une couche de polyamide 6 coloré en blanc par incorporation d'oxyde de titane (RESNO TL blanc) et d'une couche de liant OREVAC 18302.

Le RESNO TL, résine à base de polyamide 6, commercialisé par ELF ATOCHEM présente les caractéristiques indicatives suivantes:

| | |
|---|---|
| . densité (ISO R1183) | 1,13-1,14 |
| . résistance au choc Charpy entaillé (Norme ISO 179) | 6-9 kJoules/m$^2$ |
| . module de flexion à l'équilibre à 23°C-50% HR (Norme ISO 178) | 1100-1300 MPa |
| . taux d'humidité à l'équilibre 50% RH, 23°C | 2,3-2,8% |

Dans cet exemple, on obtient un produit blanc par mélangeage dans un malaxeur de 98 parties de PA6 et 2 parties en poids d'un mélange maître polystyrène contenant de l'oxyde de titane.
Les conditions d'extrusion sont les suivantes:

- extrudeuse A - alliage PA/PP (ORGALLOY R6000)

| | |
|---|---|
| . diamètre extrudeuse | 90 mm |
| . rapport longueur/diamètre | 28/1 |
| . température d'extrusion | 230/240/250/255 |

- extrudeuse B - polyamide 6 stabilisé à la chaleur et à la lumière et coloré blanc (RESNO TL blanc)

| . diamètre extrudeuse | 45 mm |
|---|---|
| . rapport longueur/diamètre | 24/1 |
| . température d'extrusion | 230/240/250/255 |

- extrudeuse C - liant à base de polyéthylène greffé anhydride maléique (OREVAC 18302)

| . diamètre extrudeuse | 45 mm |
|---|---|
| . rapport longueur/diamètre | 24/1 |
| . température d'extrusion | 210/220/230/250 |

L'entrefer de la filière est fixé à 3 mm, l'écartement des calandres est de 2,5 mm.
Les températures des rouleaux de calandrage sont de:

| . rouleau supérieur | 20°C |
|---|---|
| . rouleau médian | 60°C |
| . rouleau inférieur | 40°C |

On obtient une feuille tricouche de 1,2 mm d'épaisseur comprenant 0,3 mm d'ORGALLOY RS6000, 0,7 mm de RESNO TL blanc et 0,2 mm d'OREVAC 18302 (avec une vitesse de tirage de 1 m/minute). On réalise par pressage à chaud entre des températures de 130°C à 150°C pendant 3 à 5 minutes un assemblage sur une structure époxy ou polyester renforcée fibre de verre. On vérifie que l'adhésion entre couches est bonne par un test de pelage en T pratiqué sur des éprouvettes de 50 mm de large et de 250 mm de longueur. L'amorce est réalisée par un cutter. On obtient (moyenne de cinq essais) une valeur de 10 N/mm.

EXEMPLE III

On coextrude sur la machine décrite dans l'exemple I un tricouche composé:

- d'une couche d'un alliage PA/PP (ORGALLOY RS6000),
- d'une couche de liant type OREVAC 9314 (commercialisé par ELF ATOCHEM, ce liant est un copolymère d'éthylène et d'acétate de vinyle maléisé), et
- d'une couche de polyéthylène (1020 FN 24).

L'ORGALLOY RS6000 commercialisé par ELF ATOCHEM présente les caractéristiques indicatives suivantes:

| . Melt Flow Index (235°C, 2,16 kg) | 4 à 9 |
|---|---|
| . densité | 1,04-1,05 |
| . résistance au choc Charpy entaillé (Norme ISO 179) | 15-27 kJoules/m$^2$ |
| . module de flexion à l'équilibre à 23°C-50% HR (Norme ISO 178) | 1300-1600 MPa |
| . taux d'humidité à l'équilibre 50% RH, 23°C | 1,2-1,5% |
| . point de fusion (ISO R1218) | 220°C |

Le polyéthylène basse densité LACQTENE 1020 FN 24 commercialisé par ELF ATOCHEM présente les caractéristiques indicatives suivantes:

| | |
|---|---|
| . Melt Flow Index (190°C, 2,16 kg) | 1,5 à 4 |
| . densité | 0,91 à 0,93 |
| . allongement à la rupture (Norme ISO R527) | > 400% |
| . module d'élasticité en traction (Norme ISO R527) | 200 à 400 MPa |
| . point Vicat (ISO R306) | 90 à 100°C |

Les conditions d'extrusion sont les suivantes:

- extrudeuse A - alliage PA/PP (ORGALLOY R6000)

| | |
|---|---|
| . diamètre extrudeuse | 90 mm |
| . rapport longueur/diamètre | 28/1 |
| . température d'extrusion | 230/240/250/255 |

- extrudeuse B - liant à base de polyéthylène greffé anhydride maléique (OREVAC 9314)

| | |
|---|---|
| . diamètre extrudeuse | 45 mm |
| . rapport longueur/diamètre | 24/1 |
| . température d'extrusion | 200/210/220/240 |

- extrudeuse C - polyéthylène (1020 FN 24)

| | |
|---|---|
| . diamètre extrudeuse | 45 mm |
| . rapport longueur/diamètre | 24/1 |
| . température d'extrusion | 165/170/190/190 |

L'entrefer de la filière est fixé à 3 mm, l'écartement des calandres est de 2,5 mm. Les températures des rouleaux de calandrage sont de:

| | |
|---|---|
| . rouleau supérieur | 20°C |
| . rouleau médian | 60°C |
| . rouleau inférieur | 40°C |

On obtient une feuille tricouche de 1,2 mm d'épaisseur comprenant 0,3 mm d'ORGALLOY RS6000, 0,2 mm d'OREVAC 9314 et 0,7 mm de polyéthylène 1020 FN 24 avec une vitesse de tirage de 1 m/minute. On vérifie que l'adhésion entre couches est bonne par un test de pelage (voir exemple II), supérieure à 12 N/mm.

EXEMPLE IV

On coextrude sur la machine décrite dans l'exemple I un tricouche composé:

- d'une couche d'un alliage PA/PP (ORGALLOY RS6000),
- d'une couche de ce même alliage modifié par incorporation de 10% en poids d'un copolymère d'éthylène et de polypropylène maléisé (EPR$_m$). La composition obtenue est colorée en blanc par incorporation d'oxyde de titane (ORGALLOY R60E10 blanc), et
- d'une couche de liant OREVAC 18302.

L'ORGALLOY R60E10 commercialisé par ELF ATOCHEM présente les caractéristiques indicatives suivantes:

| | |
|---|---|
| . densité (ISO R1183) | 1,00-1,05 |
| . résistance au choc Charpy entaillé (Norme ISO 179) | 25-35 kJoules/m$^2$ |
| . module de flexion à l'équilibre à 23°C-50% HR (Norme ISO 178) | 1200-1300 MPa |
| . taux d'humidité à l'équilibre 50% RH, 23°C | 1 à 1,4% |

Dans cet exemple, on obtient un produit blanc par mélangeage dans un malaxeur de 98 parties d'ORGALLOY R60E10 et 2 parties en poids d'un mélange maître polystyrène contenant de l'oxyde de titane.
Les conditions d'extrusion sont les suivantes:

- extrudeuse A - alliage PA/PP (ORGALLOY R6000)

| | |
|---|---|
| . diamètre extrudeuse | 90 mm |
| . rapport longueur/diamètre | 28/1 |
| . température d'extrusion | 230/240/250/255 |

- extrudeuse B - alliage PA/PP coloré blanc (ORGALLOY R60E10 blanc

| | |
|---|---|
| . diamètre extrudeuse | 45 mm |
| . rapport longueur/diamètre | 24/1 |
| . température d'extrusion | 230/240/250/255 |

- extrudeuse C - liant à base de polyéthylène greffé anhydride maléique (OREVAC 18302)

| | |
|---|---|
| . diamètre extrudeuse | 45 mm |
| . rapport longueur/diamètre | 24/1 |
| . température d'extrusion | 210/220/230/250 |

L'entrefer de la filière est fixé à 3 mm, l'écartement des calandres est de 2,5 mm.
Les températures des rouleaux de calandrage sont de:

| . rouleau supérieur | 20°C |
|---|---|
| . rouleau médian | 60°C |
| . rouleau inférieur | 40°C |

On obtient une feuille tricouche de 1,2 mm d'épaisseur comprenant 0,3 mm d'ORGALLOY RS6000, 0,7 mm d'ORGALLOY R60E10 blanc et 0,2 mm d'OREVAC 18302 (avec une vitesse de tirage de 1 m/minute). On réalise par pressage à chaud entre des températures de 130°C à 150°C pendant 3 à 5 minutes un assemblage sur une structure époxy ou polyester renforcée fibre de verre. On vérifie que l'adhésion entre couches est bonne par un test de pelage en T pratiqué sur des éprouvettes de 50 mm de large et de 250 mm de longueur. L'amorce est réalisée par un cutter. On obtient (moyenne de cinq essais) une valeur de 11 N/mm.

EXEMPLE V

On coextrude sur la machine décrite dans l'exemple I un bi-couche composé:

- d'une couche d'un alliage PA/PE (ORGALLOY LE6000), et
- d'une couche de liant OREVAC 18302.

L'ORGALLOY LE6000 commercialisé par ATOCHEM présente les caractéristiques indicatives suivantes:

| . densité (ISO R1183) | 1,00-1,05 |
|---|---|
| . résistance au choc Charpy entaillé (Norme ISO 179) | 50-60 kJoules/m$^2$ |
| . module de flexion à l'équilibre à 23°C-50% HR (Norme ISO 178) | 1000-1100 MPa |
| . taux d'humidité à l'équilibre 50% RH, 23°C | 1,2-1,5% |

2Les conditions d'extrusion sont les suivantes:

- extrudeuse A - alliage PA/PE (ORGALLOY LE6000)

| . diamètre extrudeuse | 90 mm |
|---|---|
| . rapport longueur/diamètre | 28/1 |
| . température d'extrusion | 230/240/250/255 |

- extrudeuse B - liant à base de polyéthylène greffé anhydride maléique (OREVAC 18302)

| . diamètre extrudeuse | 45 mm |
|---|---|
| . rapport longueur/diamètre | 24/1 |
| . température d'extrusion | 210/220/230/250 |

L'entrefer de la filière est fixé à 3 mm, l'écartement des calandres est de 2,5 mm.

Les températures des rouleaux de calandrage sont de:

| . rouleau supérieur | 20°C |
|---|---|
| . rouleau médian | 60°C |
| . rouleau inférieur | 40°C |

On obtient une feuille bi-couche de 1,1 mm d'épaisseur comprenant 0,8 mm d'ORGALLOY LE6000, 0,3 mm d'OREVAC 18302 (avec une vitesse de tirage de 1 m/minute). On réalise par pressage à chaud entre des températures de 130°C à 150°C pendant 3 à 5 minutes un assemblage sur une structure époxy ou polyester renforcée fibre de verre. On vérifie que l'adhésion entre couches est bonne par un test de pelage en T pratiqué sur des éprouvettes de 50 mm de large et de 250 mm de longueur. L'amorce est réalisée par un cutter. On obtient (moyenne de cinq essais) une valeur supérieure à 11 N/mm.

Selon la norme NF-T-76-112 (méthode au tambour grimpant), on vérifie pour les exemples précédents que l'adhésion est supérieure à 10 N/mm.

## Revendications

1. Stratifié pour le renforcement, la protection et la décoration d'un substrat, caractérisé en ce qu'il comprend:

   (i) au moins une couche d'un alliage polyamide/polyoléfine contenant un agent de compatibilisation,
   (ii) au moins une couche d'un liant de coextrusion, la couche de liant de coextrusion étant au contact dudit substrat.

2. Stratifié selon la revendication 1, caractérisé en ce que le polyamide forme la matrice dudit alliage.

3. Stratifié selon la revendication 1 ou 2, caractérisé en ce que ladite polyoléfine dudit alliage est du polypropylène PP.

4. Stratifié selon l'une des revendications 1 à 3, caractérisé en ce que ledit polyamide dudit alliage est du PA6 ou PA6,6.

5. Stratifié selon l'une quelconque des revendications 1 à 4, caractérisé en ce que ledit polyamide représente de 30 à 70 % en poids dudit alliage.

6. Stratifié selon l'une quelconque des revendications 1 à 5, caractérisé en ce que ledit agent de compatibilisation est une (co)polyoléfine sur laquelle est greffée une fonction acide carboxylique ou un dérivé de cette fonction.

7. Stratifié selon l'une quelconque des revendications 1 à 5, caractérisé en ce que ledit alliage contient la composition suivante:

   A. une alpha-oléfine de poids moléculaire compris entre 1 000 et 1 000 000;
   B. une alpha-oléfine de A à greffon maléique ou acrylique;
   C. un copolymère d'alpha-oléfine greffé constitué d'un oligoamide ou d'un polyamide de masse comprise entre 500 et 40 000, monoaminé et d'une alpha-oléfine greffée avec un monomère pouvant réagir avec la fonction amine de l'oligoamide ou du polyamide;
   D. un polyamide aliphatique ou un mélange de polyamide aliphatique;

   les constituants A, B, C et D étant présents en des proportions, en poids, telles que:
   $30 \leq A + B + C \leq 65 ; 1 \leq A \leq 64; B + C \geq 1; 0 \leq B \leq 64; 35 \leq D \leq 70; 0 \leq C \leq 64.$

8. Stratifié selon l'une quelconque des revendications 1 à 7, caractérisé en ce que ledit liant de coextrusion est une polyoléfine modifiée ou un copolymère de polyoléfine modifiée, par un dérivé d'acide carboxylique insaturé.

9. Stratifié selon l'une quelconque des revendications 1 à 7, caractérisé en ce que ledit liant de coextrusion correspond à la composition suivante, obtenue par polymérisation de:

A. un monomère d'éthylène, ou d'alpha-oléfine ou de dioléfine,

B. au moins un comonomère choisi parmi les esters vinyliques d'acide carboxylique saturé, les acides mono- et di-carboxyliques insaturés, leurs esters, leurs sels, les anhydrides d'acides dicarboxyliques saturés ou non.

10. Stratifié selon l'une quelconque des revendications 8 ou 9, caractérisé en ce que dans ledit liant de coextrusion le monomère à base d'oléfine représente au moins 50% en poids du poids total du liant.

11. Stratifié selon l'une quelconque des revendications 1 à 10, caractérisé en ce que la couche de liant contient un additif de couleur.

12. Stratifié selon l'une quelconque des revendications 1 à 11, caractérisé en ce que son épaisseur finale est comprise entre 0,2 et 2 mm, de préférence comprise entre 0,4 et 1,3 mm.

13. Substrat revêtu d'un stratifié selon l'une quelconque des revendications 1 à 12.

14. Utilisation d'un stratifié selon l'une quelconque des revendications 1 à 12, pour la décoration selon la technique de sublimation.

15. Procédé de revêtement de substrat pour son renforcement, sa protection et sa décoration, caractérisé en ce que l'on fixe un stratifié selon l'une quelconque des revendications 1 à 12 sur ledit substrat par surmoulage, ou thermoformage avec adhésion directe, ou thermoformage puis adhésion.

**Claims**

1. A laminate for the reinforcement, protection and decoration of a substrate, characterized in that it comprises:

   (i) at least one layer of a polyamide/polyolefin alloy containing an agent ensuring compatibility ,
   (ii) at least one layer of a co-extrusion binder, the layer of coextrusion binder being in contact with said substrate.

2. The laminate according to claim 1, characterized in that the polyamide constitutes the matrix of said alloy.

3. The laminate according to claim 1 or 2, characterized in that said polyolefin in said alloy is polypropylene PP.

4. The laminate according to one of claims 1 to 3, characterized in that said polyamide in said alloy is PA6 or PA6,6.

5. The laminate according to any one of claim 1 to 4, characterized in that said polyamide represents from 30 to 70% by weight of said alloy .

6. The laminate according to any one of claim 1 to 5, characterized in that said agent ensuring compatibility comprises a (co)polyolefin on which a carboxylic acid function or a derivative of said function is grafted.

7. The laminate according to any one of claims 1 to 6, characterized in that said alloy contains the following composition:

   A. an alpha-olefin of molecular weight comprised between 1,000 and 1,000,000;
   B. a maleic-or acrylic-grafted alpha-olefin of A;
   C. a grafted copolymer of alpha-olefin consisting of a monoamino oligoamide or a polyamide of molecular weight comprised between 500 and 40,000, and of alpha-olefin grafted with a monomer able to react with the amine function of the oligoamide or the polyamide;
   D. an aliphatic polyamide or a mixture of aliphatic polyamide;
       components A, B, C and D being present in proportions by weight whereby:
       $30 \leq A + B + C \leq 65$ ; $1 \leq A \leq 64$; $B + C \geq 1$; $0 \leq B \leq 64$; $35 \leq D \leq 70$; $0 \leq C \leq 64$.

8. The laminate according to any one of claims 1 to 7, characterized in that said coextrusion binder is a polyolefin modified by means of an unsaturated carboxylic acid derivative.

9. The laminate according to any one of claims 1 to 7, characterized in that said coextrusion binder corresponds to the following composition obtained by polymerisation of:

A. an ethylene, alpha-olefin or di-olefin monomer,

B. at least one co-monomer selected from saturated carboxylic acid vinylic esters, unsaturated mono- and di-carboxylic acids and esters, salts, thereof, and saturated or unsaturated di-carboxylic acids anhydrides.

10. The laminate according to either one of claims 8 or 9, characterized in that, in said co-extrusion binder, the olefin-based monomer makes up at least 50% by weight of the total weight of binder.

11. The laminate according to any one of claims 1 to 10, characterized in that the layer of binder contains a coloured additive.

12. The laminate according to any one of claims 1 to 11, characterized in that the final thickness of said laminate is comprised between 0.2 and 2 mm, and is preferably comprised between 0.4 and 1.3 mm.

13. A substrate coated with a laminate according to any one of claims 1 to 12.

14. The use of a laminate according to any one of claims 1 to 12, for decorative purposes using the sublimation technique.

15. A process for reinforcing, protecting and decorating a substrate, characterized in that a laminate according to any one of claims 1 to 12 is fixed onto said substrate by insert-molding the laminate over the substrate, or by thermoforming the laminate with simultaneous adhesion, or by thermoforming the laminate followed by adhesion.

**Patentansprüche**

1. Laminat zur Verstärkung, zum Schutz und zur Oberflächengestaltung eines Substrats,
   **dadurch gekennzeichnet, daß**
   es umfaßt:

   (i) mindestens eine Schicht einer Legierung Polyamid/Polyolefin, die ein Kompatibilisierungsmittel enthält,

   (ii) mindestens eine Schicht eines Koextrusionsbindemittels, wobei die Koextrusionsbindemittelschicht mit dem Substrat in Kontakt steht.

2. Laminat nach Anspruch 1, dadurch gekennzeichnet, daß das Polyamid die Matrix der Legierung bildet.

3. Laminat nach Anspruch 1 oder 2, dadurch gekennzeichnet, daß das Polyolefin der Legierung Polypropylen PP ist.

4. Laminat nach einem der Ansprüche 1 bis 3, dadurch gekennzeichnet, daß das Polyamid der Legierung PA6 oder PA6,6 ist.

5. Laminat nach einem der Ansprüche 1 bis 4, dadurch gekennzeichnet, daß das Polyamid 30 bis 70 Gew.-% der Legierung ausmacht.

6. Laminat nach einem der Ansprüche 1 bis 5, dadurch gekennzeichnet, daß das Kompatibilisierungsmittel ein (Co)Polyolefin ist, auf das eine Carbonsäuregruppe oder ein Derivat dieser Gruppe gepfropft ist.

7. Laminat nach einem der Ansprüche 1 bis 5, dadurch gekennzeichnet, daß die Legierung die folgende Zusammensetzung aufweist:

   A. ein $\alpha$-Olefin mit einem Molekülgewicht im Bereich von 1000 bis 1000000;

   B. ein $\alpha$-Olefin A mit Maleinsäure- oder Acrylsäure-Pfropfzweigen;

   C. ein Copolymer eines gepfropften $\alpha$-Olefins, das aus einem Oligoamid oder Polyamid einer Masse im Bereich von 500 bis 40000 mit einer Aminogruppe und einem $\alpha$-Olefin besteht, das mit einem Monomer gepfropft ist welches mit der Aminogruppe des Oligoamids oder Polyamids reagieren kann;

   D. ein aliphatisches Polyamid oder ein Gemisch von aliphatischen Polyamiden;

wobei die Bestandteile A, B, C und D in solchen Mengenanteilen (in Gew.-%) vorliegen, daß gilt:
$$30 \leq A + B + C \leq 65 \; ; \; 1 \leq A \leq 64; \; B + C \geq 1; \; 0 \leq B \leq 64; \; 35 \leq D \leq 70; \; 0 \leq C \leq 64.$$

8. Laminat nach einem der Ansprüche 1 bis 7, dadurch gekennzeichnet, daß das Koextrusionsbindemittel ein durch ein ungesättigtes Cabonsäurederivat modifiziertes Polyolefin oder ein durch ein ungesättigtes Carbonsäurederivat modifiziertes Polyolefin-Copolymer ist.

9. Laminat nach einem der Ansprüche 1 bis 7, dadurch gekennzeichnet, daß das Koextrusionsbindemittel der folgenden Zusammensetzung entspricht, enthalten durch Polymerisation von:

   A. einem Ethylen-Monomer, $\alpha$-Olefin-Monomer oder Diolefin-Monomer,

   B. mindestens einem Comonomer, das unter den Vinylestern von gesättigten Carbonsäuren, ungesättigten Mono- und Dicarbonsäuren, deren Estern, deren Salzen und gesättigten oder ungesättigten Dicarbonsäureanhydriden ausgewählt ist.

10. Laminat nach einem der Ansprüche 8 oder 9, dadurch gekennzeichnet, daß das Monomer auf Olefinbasis in dem Koextrusionsbindemittel mindestens 50 Gew.-% des Gesamtgewichts des Bindemittels ausmacht.

11. Laminat nach einem der Ansprüche 1 bis 10, dadurch gekennzeichnet, daß die Bindemittelschicht einen Farbzusatz enthält.

12. Laminat nach einem der Ansprüche 1 bis 11, dadurch gekennzeichnet, daß seine Enddicke im Bereich von 0,2 bis 2 mm und vorzugsweise von 0,4 bis 1,3 mm liegt.

13. Substrat, das mit einem Laminat nach einem der Ansprüche 1 bis 12 überzogen ist.

14. Verwendung eines Laminats nach einem der Ansprüche 1 bis 12 zur Oberflächengestaltung nach der Sublimationstechnik.

15. Verfahren zum Überziehen eines Substrats zur Verstärkung, zum Schutz und zur Oberflächengestaltung des Substrats, dadurch gekennzeichnet, daß ein Laminat nach einem der Ansprüche 1 bis 12 auf dem Substrat durch Überspritzen, Thermoformung mit direkter Haftung oder Thermoformung und anschließender Haftung befestigt wird.